# FASCICULE DE BREVET EUROPEEN

(11) **EP 3 847 096 B1**
(45) Date de publication et mention de la délivrance du brevet: **28.09.2022**
(21) Numéro de dépôt: 19755632.7
(22) Date de dépôt: 19.08.2019
(51) Int. Cl.: B64C 13/04, G05G 9/047, G05G 5/03

(54) **DISPOSITIF DE COMMANDE DE VOL D'UN AERONEF**
FLUGSTEUERVORRICHTUNG FÜR EIN FLUGZEUG
AIRCRAFT FLIGHT CONTROL DEVICE

(30) Priorité: 04.09.2018 FR 1857941
(43) Date de publication de la demande: 14.07.2021
(73) Titulaire: Safran Electronics & Defense, 75015 Paris (FR)
(72) Inventeur: WERQUIN, Mickael, 77550 Moissy-Cramayel (FR)
(74) Mandataire: Decorchemont, Audrey Véronique Christèle
(86) Numéro de dépôt international: PCT/EP2019/072126
(87) Numéro de publication internationale: WO 2020/048757

(56) Documents cités:
- FR-A1- 3 011 815
- US-A1- 2017 131 737

## Description

L'invention concerne un dispositif de commande de vol d'un aéronef.

### ARRIERE PLAN TECHNOLOGIQUE DE L'INVENTION

Les dispositifs de commande de vol pour aéronefs comportent usuellement un levier de commande qui est monté pivotant sur le bâti du dispositif de commande selon au moins deux axes de rotation perpendiculaires l'un par rapport à l'autre afin de pouvoir commander des mouvements de roulis et de tangage de l'aéronef. A cet effet, le levier de commande est relié mécaniquement ou électriquement à un ou plusieurs organes de pilotage de l'aéronef comme des gouvernes.

Afin d'assister le pilote dans la commande en roulis et en tangage de l'aéronef, il est connu des dispositifs de commande de vol qui comprennent des moteurs de commande associés au levier de sorte que, pour chaque mouvement de rotation du levier relativement au bâti, l'un des moteurs permette de simuler un retour d'effort au pilote dirigeant le levier. Le levier est ainsi manipulable facilement et sans effort par le pilote.

Il est par exemple connu du document FR-A-2 954 835 un dispositif de commande comportant deux actionneurs électromagnétiques associés au levier de commande pour simuler un retour d'effort pour chaque mouvement de rotation du levier autour du bâti.

Toutefois, les actionneurs électromagnétiques sont alors directement incorporés dans le bâti du dispositif de commande de sorte que le dispositif s'avère encombrant. Ceci est particulièrement gênant pour les aéronefs comprenant des cabines de pilotage de petites tailles comme les hélicoptères car le dispositif de commande peut gêner le pilote.

Dans le document FR 3 011 815, la présente demanderesse a proposé un dispositif de commande de vol amélioré qui puisse notamment être implanté plus aisément dans les cabines de pilotage de petites tailles.

Toutefois avec l'architecture principale illustrée dans ce document, l'effort ressenti au niveau du levier de commande pour une rotation autour du deuxième axe de rotation Y sera différent selon que le levier de commande est en outre incliné selon le premier axe de rotation X à droite ou à gauche.

Afin de pallier cet inconvénient, on a proposé d'avoir recours à un asservissement particulier pour symétriser l'effort ressenti sur le levier de commande pour une rotation autour du deuxième axe de rotation Y, que le levier de commande soit en outre incliné à droite ou à gauche.

Néanmoins ceci oblige à mettre au point un asservissement particulier limitant l'exploitation des moteurs employés.

### OBJET DE L'INVENTION

Un but de l'invention est de proposer un dispositif de commande de vol qui obvie au moins en partie à l'inconvénient précité.

### BREVE DESCRIPTION DE L'INVENTION

En vue de la réalisation de ce but on propose un dispositif de commande de vol d'un aéronef, comportant un bâti, un levier de commande associé au bâti et:
- une platine reliée au bâti par une première liaison pivot autour d'un premier axe, le levier de commande étant relié à la platine par une deuxième liaison pivot autour d'un deuxième axe qui est sécant au premier axe,
- un premier arbre de transmission monté pivotant par rapport au bâti autour d'un troisième axe et relié à au moins un premier moteur de commande déporté du bâti,
- un premier mécanisme de liaison du levier de commande au premier arbre de transmission de sorte que la rotation du levier de commande autour du premier axe provoque la rotation du premier arbre autour du troisième axe,

- un deuxième arbre de transmission monté pivotant par rapport au bâti autour d'un quatrième axe et relié à au moins un deuxième moteur de commande déporté du bâti,
- un deuxième mécanisme de liaison du levier de commande au deuxième arbre de sorte que la rotation du levier de commande autour du deuxième axe provoque la rotation du deuxième arbre autour du quatrième axe,
le premier arbre et le premier mécanisme de liaison étant reliés l'un à l'autre par une liaison pivot autour d'un cinquième axe incliné par rapport au premier axe et au troisième axe ; et le deuxième arbre et le deuxième mécanisme de liaison étant reliés l'un à l'autre par une liaison pivot autour d'un sixième axe incliné par rapport au deuxième axe et au quatrième axe.

Selon l'invention, la platine est conformée de manière qu'un angle entre le deuxième axe et le sixième axe soit strictement supérieur, lorsque le levier de commande est dans une position neutre, au complémentaire d'un angle entre le quatrième axe et le sixième axe.

Par une telle conformation particulière du dispositif de commande de vol, on peut s'affranchir (au moins partiellement) de l'asservissement particulier permettant de symétriser le retour d'efforts ressenti sur le levier de commande pour une rotation autour du deuxième axe de rotation, que le levier de commande soit en outre incliné ou non sur le premier axe de rotation.

Une telle solution est en outre avantageusement simple à mettre en œuvre.

Pour la présente demande, par « un axe A incliné par rapport à un axe B » on entend que l'axe A n'est ni parallèle ni perpendiculaire à l'axe B.

Préférentiellement, l'angle entre le deuxième axe et le sixième axe est supérieur ou égal à 75 degrés lorsque le levier de commande est dans la position neutre.

De préférence, l'angle entre le deuxième axe et le sixième axe est compris entre 75 et 100 degrés.

Optionnellement, l'angle entre le deuxième axe et le sixième axe est compris entre 75 et 90 degrés.

### BREVE DESCRIPTION DES DESSINS

L'invention sera mieux comprise à la lumière de la description qui suit d'un mode de réalisation non limitatif de l'invention en référence aux figures ci-jointes, parmi lesquelles :
- la figure 1 est un schéma d'un dispositif de commande de vol selon un mode de réalisation particulier de l'invention,
- la figure 2 est une partie du schéma représenté à la figure 1.

### DESCRIPTION DETAILLEE DE L'INVENTION

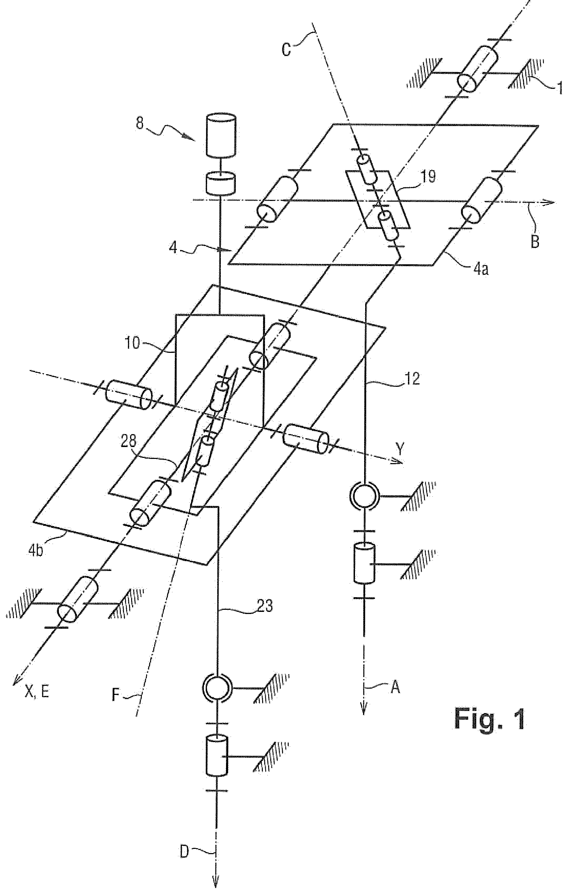

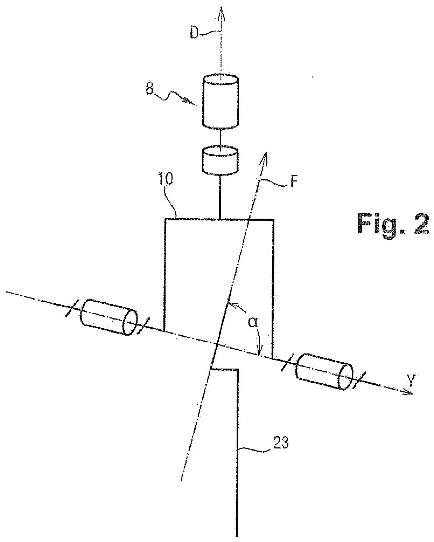

En référence aux figures 1 à 2, le dispositif de commande de vol selon le mode de réalisation particulier de l'invention comporte un bâti 1. De façon particulière, le bâti 1 s'étend longitudinalement et comporte un plancher 2 et au moins deux parois latérales opposées l'une à l'autre et s'étendant toutes deux à la verticale du plancher 2.

Le dispositif comporte en outre une première platine 4. La première platine 4 comporte un premier cadre 4a et un deuxième cadre 4b immobile l'un par rapport à l'autre. Les deux cadres 4a et 4b sont par exemple d'une seule pièce ou bien sont deux pièces rigidement fixées l'une à l'autre. Les deux cadres ont conjointement la forme générale d'un châssis sensiblement de même longueur que le bâti 1. Les deux cadres 4a, 4b s'étendent toutefois de manière oblique l'un par rapport à l'autre. Ainsi si les deux cadres 4a et 4b s'étendent tous deux longitudinalement selon le premier axe X, le deuxième cadre 4b s'étend latéralement de manière inclinée vis-à-vis du premier cadre 4a. Typiquement, le premier cadre 4a s'étend sensiblement parallèlement au plancher du bâti 1 alors que le deuxième cadre 4b est incliné vis-à-vis de ce plancher. La première platine 4 est donc conformée en un châssis vrillé.

La première platine 4 est directement liée au bâti 1 par une première liaison pivot de premier axe de rotation X. Typiquement, le premier cadre 4a est monté pivotant sur l'une des parois latérales du bâti 1 et le deuxième cadre 4b est monté pivotant sur l'autre des parois latérales du bâti 1.

Le dispositif comporte en outre un levier de commande 8 qui est associé au bâti 1 et qui comporte ici un manche formant une extrémité libre du levier de commande et une deuxième platine 10 ici d'une seule pièce avec le manche.

La deuxième platine 10 (et par là le levier de commande 8) est directement lié au deuxième cadre 4b de la première platine 4 par une deuxième liaison pivot de deuxième axe de rotation Y, le deuxième axe Y étant sécant au premier axe X. On notera que le deuxième axe Y est lié à la première platine 4, c'est-à-dire qu'un pivotement de la première platine 4 autour du premier axe X provoque un pivotement du deuxième axe Y autour du premier axe X.

Le dispositif comporte un premier arbre de transmission 12 directement lié au bâti 1 par une troisième liaison pivot de troisième axe de rotation A.

Le premier arbre de transmission 12 est ici agencé de sorte que le troisième axe A soit sécant avec le premier axe X.

Le premier arbre 12 comporte une première extrémité. La première extrémité comprend une portion terminale rectiligne et une portion coudée de raccordement de la portion terminale rectiligne à la deuxième extrémité du deuxième arbre. La portion terminale rectiligne de la première extrémité s'étend donc obliquement par rapport au troisième axe A et à la deuxième extrémité du deuxième arbre de transmission.

La deuxième extrémité du premier arbre 12 est reliée à un premier groupe de moteurs (non illustré ici) qui est déporté du bâti.

Le dispositif comporte en outre un premier mécanisme de liaison du levier de commande 8 au premier arbre de transmission 12 de sorte que la rotation du levier de commande 8 autour du premier axe X provoque la rotation du premier arbre de transmission 12 autour du troisième axe A.

De préférence, le premier mécanisme de liaison relie le premier arbre de transmission 12 au levier de commande 8 par une liaison cardan.

Le premier mécanisme de liaison comporte ainsi ici une première croix 19 comprenant deux branches s'étendant perpendiculairement l'une à l'autre.

De façon particulière, le premier mécanisme de liaison est directement lié au premier cadre 4a par une quatrième liaison pivot de quatrième axe de rotation B. A cet effet, une première branche de la première croix 19 est montée pivotante sur le premier cadre 4a selon ladite quatrième liaison pivot de quatrième axe de rotation B. La première croix 19 est agencée de sorte que le quatrième axe B soit concourant avec le premier axe X et le troisième axe A.

De la sorte, le premier arbre de transmission 12 est agencé pour que le troisième axe A soit normal à un plan contenant le premier axe X et le quatrième axe B lorsque le levier de commande 8 est dans une position neutre.

La deuxième branche de la première croix 19 est ici pourvue d'un perçage central s'étendant sur toute la longueur de la deuxième branche. Le premier arbre de transmission 12 est directement lié à la première croix 19 par une cinquième liaison pivot de cinquième axe de rotation C. A cet effet, la portion terminale rectiligne du premier arbre de transmission 12 s'étend à l'intérieur de la deuxième branche et est montée pivotante dans le perçage central de la deuxième branche par l'intermédiaire de deux roulements coaxiaux.

Le dispositif est agencé de sorte que le cinquième axe C est incliné par rapport au premier axe X, au troisième axe A et au quatrième axe B, et est sécant au premier axe X, au troisième axe A et au quatrième axe B. Le premier arbre de transmission 12 est ici conformé de sorte que la portion terminale rectiligne s'étende à 25 degrés de la deuxième extrémité du premier arbre de transmission 12, le cinquième axe C s'étendant alors ici à 25 degrés du troisième axe A.

De par la forme particulière coudée du premier arbre de transmission 12 il est ainsi possible d'autoriser une liaison pivot entre le premier arbre 12 et le premier mécanisme de liaison qui soit d'axe incliné notamment par rapport au premier axe X et au troisième axe A.

La transmission du couple entre le levier de commande 8 et le premier arbre de transmission 12 se fait ainsi par l'intermédiaire de la première platine 4 (et en particulier ici du premier cadre 4a et du deuxième cadre 4b) et de la première croix 19. Lorsque le levier de commande 8 est déplacé par le pilote autour du premier axe de rotation X, la première platine 4 est également entraînée en rotation relativement au bâti 1 autour du premier axe de rotation X ce qui entraîne, de par la liaison cardan créée par la première croix 19, une rotation du premier arbre de transmission 12 autour du troisième axe A.

Le dispositif comporte un deuxième arbre de transmission 23 directement lié au bâti 1 par une sixième liaison pivot de sixième axe de rotation D.

Le deuxième arbre de transmission 23 est ici agencé de sorte que le sixième axe D soit sécant avec le premier axe X et le deuxième axe Y. De la sorte, le deuxième arbre de transmission 23 est agencé pour que le sixième axe D soit normal à un plan contenant le premier axe X et le quatrième axe B lorsque le levier de commande 8 est en position neutre.

Le sixième axe D est ainsi parallèle au troisième axe A.

Le deuxième arbre 23 comporte une première extrémité. La première extrémité comprend une portion terminale rectiligne et une portion coudée de raccordement de la portion terminale rectiligne à la deuxième extrémité du deuxième arbre 23. La portion terminale rectiligne de la première extrémité s'étend donc obliquement au sixième axe D et à la deuxième extrémité.

La deuxième extrémité du deuxième arbre 23 est reliée à un deuxième groupe de moteurs (non illustré ici) qui est déporté du bâti.

Le dispositif comporte en outre un deuxième mécanisme de liaison du levier de commande 8 au deuxième arbre de transmission 23 de sorte que la rotation du levier de commande 8 autour du deuxième axe Y provoque la rotation du deuxième arbre de transmission 23 autour du sixième axe D.

De préférence, le deuxième mécanisme de liaison relie le deuxième arbre de transmission 23 au levier de commande 8 par une liaison cardan.

Le deuxième mécanisme de liaison comporte ici une deuxième croix 28 comprenant deux branches s'étendant perpendiculairement l'une à l'autre.

De façon particulière, le deuxième mécanisme de liaison est directement lié à la deuxième platine 10 par une septième liaison pivot de septième axe de rotation E qui est ici confondu avec le premier axe de rotation X. A cet effet, une première extrémité de la première branche de la deuxième croix 28 est montée pivotante sur la deuxième platine 10 selon ladite septième liaison pivot de septième axe de rotation E.

La deuxième branche de la deuxième croix 28 est ici pourvue d'un perçage central s'étendant sur toute la longueur de la deuxième branche. Le deuxième arbre de transmission 23 est directement lié à la deuxième croix 28 par une huitième liaison pivot de huitième axe de rotation F. A cet effet, la portion terminale du deuxième arbre de transmission 23 s'étend à l'intérieur de la deuxième branche et est montée pivotante dans le perçage central de la deuxième branche par l'intermédiaire de deux roulements coaxiaux.

Le dispositif est agencé de sorte que le huitième axe F est incliné par rapport au premier axe X, au deuxième axe Y et au sixième axe D, et est sécant au premier axe X, au deuxième axe Y et au sixième axe D. Le deuxième arbre de transmission 23 est ici conformé de sorte que la une portion terminale s'étende à 25 degrés de la deuxième extrémité du deuxième arbre de transmission 23, le huitième axe F s'étendant ainsi ici à 25 degrés par rapport au sixième axe D.

De par la forme particulière coudée du deuxième arbre de transmission 23 il est ainsi possible d'autoriser une liaison pivot entre le deuxième arbre 23 et le deuxième mécanisme de liaison qui soit d'axe incliné notamment par rapport au deuxième axe Y et au sixième axe D.

La transmission du couple entre le levier de commande 8 et le deuxième arbre de transmission 23 se fait ainsi par l'intermédiaire uniquement de la deuxième croix 28. Lorsque le levier de commande 8 est déplacé par le pilote autour du deuxième axe de rotation Y cela entraîne, de par la liaison cardan créée par la deuxième croix 28, une rotation du deuxième arbre de transmission 23 autour du sixième axe D. Ceci n'entraine toutefois pas de rotation du premier arbre de transmission 12 autour du troisième axe A.

En revanche, on note que lorsque le levier de commande 8 est déplacé par le pilote autour du premier axe de rotation X, cela entraîne non seulement une rotation du premier arbre de transmission 12 autour du troisième axe A mais également une rotation du deuxième arbre de transmission 23 autour du sixième axe D entraînant ainsi un couplage.

Afin de limiter au maximum les effets de ce couplage, le deuxième cadre 4b de la platine est conformé de manière qu'un angle α entre le deuxième axe Y et le huitième axe F soit strictement supérieur au complément de l'angle s'étendant entre le sixième axe D et le huitième axe F lorsque le levier de commande 8 est dans la position neutre.

Ceci permet de symétriser au moins en partie naturellement l'effort ressenti au niveau du levier de commande 8 lors de la rotation autour du deuxième axe Y, correspondant à la commande en tangage, que le levier de commande 8 soit pivoté ou non autour du premier axe X, correspondant à la commande en roulis.

Dans le cas présent, ledit complément est de 155 degrés, l'angle entre le sixième axe D et le huitième axe F étant de 25 degrés. L'angle α entre le deuxième axe Y et le huitième axe F doit donc ici être strictement supérieur à 155 degrés lorsque le levier de commande 8 est dans la position neutre.

De façon avantageuse la forme vrillée de la première platine 4 évite qu'avec cette inclinaison du deuxième cadre 4b on ne reporte le problème d'asymétrie sur le premier axe X. Au niveau du premier cadre 4a, le quatrième axe B est bien perpendiculaire au premier axe X.

Ainsi le dispositif selon le mode de réalisation particulier de l'invention comporte seulement huit liaisons pivots et six éléments principaux (premier arbre de transmission 12, deuxième arbre de transmission 23, première croix 19, deuxième croix 28, première platine 4 et levier de commande 8) tout en permettant d'associer un groupe de moteur à chaque mouvement de rotation du levier de commande 8 relativement au bâti 1. Le dispositif selon le mode de réalisation particulier de l'invention s'avère donc de construction simplifiée.

En outre, les différents éléments du dispositif sont uniquement liés les uns par rapport aux autres par des roulements. Ceci permet de simplifier le dispositif et de le rendre plus fiable. En effet, on s'affranchit ainsi d'engrenages sensibles au grippage ou de courroies sensibles aux ruptures.

De préférence, le dispositif est agencé de sorte que le premier axe X, le deuxième axe Y, le sixième axe D et le huitième axe F sont tous concourants en un premier point et le premier axe X, le troisième axe A, le quatrième axe B et le cinquième axe C sont tous concourants en un deuxième point.

Ainsi, les différents axes de rotation du dispositif sont concourants en uniquement deux points ce qui permet d'avoir un dispositif particulièrement compact.

Bien entendu l'invention n'est pas limitée au mode de réalisation décrit et on peut y apporter des variantes sans sortir du cadre de l'invention tel que défini par les revendications.

En particulier, bien qu'ici le levier de commande soit relié à deux groupes de moteurs de commande, on pourra envisager que le levier de commande soit relié à un troisième moteur de commande (ou un troisième groupe de moteurs de commande) pour la rotation du levier de commande autour d'un axe sécant avec le premier axe et le deuxième axe et normal au plan formé par le premier axe et le quatrième axe lorsque le levier de commande est en position neutre.

Par position neutre, on entendra de façon générale la position du levier de commande dans laquelle aucun effort n'est exercé sur le levier de commande de sorte que si le dispositif reposait sur une surface plane le plan formé par le premier axe et le quatrième axe serait parallèle à ladite surface. Ainsi, dans la position neutre, le levier de commande n'est typiquement pas incliné selon le premier axe ni incliné selon le deuxième axe.

Bien que dans le mode de réalisation particulier de l'invention, les arbres de transmission soient directement liés aux arbres de sorties des groupes de moteurs correspondants, les arbres de transmission pourront en variante être reliés auxdits arbres de sorties par l'intermédiaire de dispositifs de transmission de mouvement.

Bien que dans le mode de réalisation particulier de l'invention, la portion coudée de l'un des arbres de transmission s'étende à 25 degrés du reste de l'arbre de transmission correspondant, la portion coudée pourra être conformée de sorte que le cinquième axe (ou le huitième axe) s'étende à un autre angle du troisième axe (ou du sixième axe). De la même façon on pourra adapter l'angle de la partie coudée des arbres de transmission du mode de réalisation particulier de l'invention pour obtenir l'inclinaison voulue du cinquième axe ou du huitième axe. De façon générale on décidera d'une géométrie particulière des mécanismes de liaison et/ou des arbres de transmission pour adapter l'inclinaison du cinquième axe et du huitième axe.

En particulier, au moins l'angle entre le huitième axe et le sixième axe dépendra de l'amplitude du levier de commande recherché. Cet angle pourra ainsi varier par exemple de 10 à 65 degrés pour une amplitude de levier de commande comprise entre 5 degrés (en valeur absolue) et 30 degrés (en valeur absolue).

En conséquence l'angle entre le deuxième axe et le huitième axe pourra également être différent de ce qui a été indiqué à condition d'être strictement supérieur au complément de l'angle entre le huitième axe et le sixième axe. Par exemple l'angle entre le deuxième axe et le huitième axe pourra être supérieur ou égal à 75 degrés lorsque le levier de commande est dans la position neutre. Optionnellement, l'angle entre le deuxième axe et le huitième axe pourra être compris entre 75 et 100 degrés. Optionnellement encore, l'angle entre le deuxième axe et le huitième axe pourra être compris entre 75 et 90 degrés.

De préférence, on cherchera à s'approcher au maximum d'un angle optimal théorique (tout en prenant en compte la faisabilité de production), angle optimal théorique qui dépendra non seulement de l'angle entre le sixième axe et le huitième axe mais également de l'amplitude du levier de commande visée. Ceci permettra de symétriser au mieux au moins en partie naturellement l'effort ressenti au niveau du levier de commande lors de la rotation autour du deuxième axe Y, correspondant à la commande en tangage, que le levier de commande soit pivoté ou non autour du premier axe X, correspondant à la commande en roulis.

Cet optimum pourra par exemple être compris entre 75 et 90 degrés, et de préférence entre 78 et 86 degrés, pour une amplitude de levier de commande comprise entre 5 degrés (en valeur absolue) et 30 degrés (en valeur absolue).

Bien entendu pour toute la présente demande lorsque deux pièces sont montées pivotantes l'une par rapport à l'autre cela peut se faire directement (les deux pièces sont alors en contact) ou par l'intermédiaire d'autres pièces.

L'une ou l'autre des pièces liées par une liaison pivot pourront indifféremment porter le ou les roulements ou tout autre moyen nécessaire à la réalisation de la liaison pivot entre les deux pièces.

Les arbres de transmission pourront être montés pivotant relativement au bâti selon le troisième axe et le sixième axe en étant directement guidés et montés en rotation sur le bâti ou en étant guidés et montés en rotation sur le stator du moteur de commande correspondant.

D'autres agencements sont envisageables.

## Revendications

1. Dispositif de commande de vol d'un aéronef, comportant un bâti (1), un levier de commande (8) associé au bâti (1) et :
- une platine (4) reliée au bâti par une première liaison pivot autour d'un premier axe (X), le levier de commande étant relié à la platine par une deuxième liaison pivot autour d'un deuxième axe (Y) sécant au premier axe,
- un premier arbre de transmission (12 ) monté pivotant par rapport au bâti autour d'un troisième axe (A) et relié à au moins un premier moteur de commande déporté du bâti,
- un premier mécanisme de liaison du levier de commande au premier arbre de transmission de sorte que la rotation du levier de commande autour du premier axe provoque la rotation du premier arbre autour du troisième axe,
- un deuxième arbre de transmission (23 ) monté pivotant par rapport au bâti autour d'un quatrième axe (D) et relié à au moins un deuxième moteur de commande déporté du bâti,
- un deuxième mécanisme de liaison du levier de commande au deuxième arbre de sorte que la rotation du levier de commande autour du deuxième axe provoque la rotation du deuxième arbre autour du quatrième axe,
le premier arbre et le premier mécanisme de liaison étant reliés l'un à l'autre par une liaison pivot autour d'un cinquième axe (C) incliné par rapport au premier axe et au troisième axe ; et le deuxième arbre et le deuxième mécanisme de liaison étant reliés l'un à l'autre par une liaison pivot autour d'un sixième axe (F) incliné par rapport au deuxième axe et au quatrième axe,
le dispositif étant **caractérisé en ce que** la platine est conformée de manière qu'un angle entre le deuxième axe (Y) et le sixième axe (F) soit strictement supérieur, lorsque le levier de commande est dans une position neutre, au complémentaire d'un angle entre le quatrième axe (D) et le sixième axe (F).

2. Dispositif selon la revendication 1, dans lequel l'angle entre le deuxième axe et le sixième axe est supérieur ou égal à 75 degrés lorsque le levier de commande est dans la position neutre.

3. Dispositif selon la revendication 2, dans lequel l'angle entre le deuxième axe et le sixième axe est compris entre 75 et 100 degrés lorsque le levier de commande est dans la position neutre.

4. Dispositif selon la revendication 3, dans lequel l'angle entre le deuxième axe et le sixième axe est compris entre 75 et 90 degrés lorsque le levier de commande est dans la position neutre.

5. Dispositif selon l'une des revendications 1 à 4, dans lequel la platine comporte un premier cadre et un deuxième cadre inclinés l'un par rapport à l'autre, le premier arbre étant associé au premier cadre et le deuxième arbre étant associé au deuxième cadre.

6. Dispositif selon l'une des revendications précédentes, agencé de sorte que le premier axe (X), le deuxième axe (Y), le quatrième axe (D) et le sixième axe (F) soient sensiblement concourants en un premier point et le premier axe, le troisième axe (A) et le cinquième axe (C) soient sensiblement concourants en un deuxième point.

7. Dispositif selon l'une des revendications 1 à 6, dans lequel le premier mécanisme est agencé pour relier le premier arbre (12) à la platine (4) par une liaison cardan.

8. Dispositif selon l'une des revendications 1 à 7, dans lequel le deuxième mécanisme est agencé pour relier le deuxième arbre (23) au levier de commande (8) par une liaison cardan.

## Patentansprüche

1. Flugsteuervorrichtung für ein Luftfahrzeug, umfassend einen Körper (1), einen Steuerhebel (8), der mit dem Körper (1) verbunden ist, und:
- eine Platte (4), die mit dem Körper über eine erste Drehverbindung zur Drehung um eine erste Achse (X) verbunden ist, wobei der Steuerhebel mit der Platte über eine zweite Drehverbindung zur Drehung um eine zweite Achse (Y) verbunden ist, die die erste Achse schneidet,
- eine erste Übertragungswelle (12), die in Bezug auf den Körper drehbar um eine dritte Achse (A) gelagert und mit mindestens einem aus dem Körper ausgelagerten ersten Steuermotor verbunden ist,
- einen ersten Verbindungsmechanismus zur Verbindung des Steuerhebels mit der ersten Übertragungswelle, derart, dass die Drehung des Steuerhebels um die erste Achse die Drehung der ersten Welle um die dritte Achse bewirkt,
- eine zweite Übertragungswelle (23), die in Bezug auf den Körper drehbar um eine vierte Achse (D) gelagert und mit mindestens einem aus dem Körper ausgelagerten zweiten Steuermotor verbunden ist,
- einen zweiten Verbindungsmechanismus zur Verbindung des Steuerhebels mit der zweiten Welle, derart, dass die Drehung des Steuerhebels um die zweite Achse die Drehung der zweiten Welle um die vierte Achse bewirkt,
wobei die erste Welle und der erste Verbindungsmechanismus miteinander über eine Drehverbindung zur Drehung um eine fünfte Achse (C) verbunden sind, die in Bezug auf die erste Achse und die dritte Achse geneigt ist; und wobei die zweite Welle und der zweite Verbindungsmechanismus miteinander über eine Drehverbindung zur Drehung um eine sechste Achse (F) verbunden sind, die in Bezug auf die zweite Achse und die vierte Achse geneigt ist,
wobei die Vorrichtung **dadurch gekennzeichnet ist, dass** die Platte so geformt ist, dass, wenn der Steuerhebel in einer neutralen Position ist, ein Winkel zwischen der zweiten Achse (Y) und der sechsten Achse (F) strikt größer ist als das Komplement eines Winkels zwischen der vierten Achse (D) und der sechsten Achse (F).

2. Vorrichtung nach Anspruch 1, bei der der Winkel zwischen der zweiten Achse und der sechsten Achse größer oder gleich 75 Grad ist, wenn der Steuerhebel in der neutralen Position ist.

3. Vorrichtung nach Anspruch 2, bei der der Winkel zwischen der zweiten Achse und der sechsten Achse zwischen 75 und 100 Grad beträgt, wenn der Steuerhebel in der neutralen Position ist.

4. Vorrichtung nach Anspruch 3, bei der der Winkel zwischen der zweiten Achse und der sechsten Achse zwischen 75 und 90 Grad beträgt, wenn der Steuerhebel in der neutralen Position ist.

5. Vorrichtung nach einem der Ansprüche 1 bis 4, bei der die Platte einen ersten Rahmen und einen zweiten Rahmen umfasst, die zueinander geneigt sind, wobei die erste Welle mit dem ersten Rahmen und die zweite Welle mit dem zweiten Rahmen verbunden ist.

6. Vorrichtung nach einem der vorhergehenden Ansprüche, die derart ausgebildet ist, dass die erste Achse (X), die zweite Achse (Y), die vierte Achse (D) und die sechste Achse (F) im Wesentlichen in einem ersten Punkt zusammenfallen und die erste Achse, die dritte Achse (A) und die fünfte Achse (C) im Wesentlichen in einem zweiten Punkt zusammenfallen.

7. Vorrichtung nach einem der Ansprüche 1 bis 6, bei der der erste Mechanismus ausgebildet ist, um die erste Welle (12) mit der Platte (4) über eine Kardanverbindung zu verbinden.

8. Vorrichtung nach einem der Ansprüche 1 bis 7, bei der der zweite Mechanismus ausgebildet ist, um die zweite Welle (23) mit dem Steuerhebel (8) über ein Kardanverbindung zu verbinden.

## Claims

1. An aircraft flight control device comprising a control lever (8) associated with a body (1) carrying:
• a plate (4) connected to the body by a first pivot connection for pivoting about a first axis (X), the control lever being connected to the plate by a second pivot connection for pivoting about a second axis (Y) intersecting the first axis;
• a first transmission shaft (12) mounted to pivot relative to the body about a third axis (A) and connected to at least one first control motor outside the body;
• a first connection mechanism connecting the control lever to the first transmission shaft in such a manner that pivoting the control lever about the first axis causes the first shaft to pivot about the third axis;
• a second transmission shaft (23) mounted to pivot relative to the body about a fourth axis (D) and connected to at least one second control motor outside the body; and
• a second connection mechanism connecting the control lever to the second shaft in such a manner that pivoting the control lever about the second axis causes the second shaft to pivot about the fourth axis;
the first shaft and the first connection mechanism being connected to each other by a pivot connection for pivoting about a fifth axis (C) that is inclined relative to the first axis and to the third axis; and the second shaft and the second connection mechanism being connected to each other about a pivot connection for pivoting about a sixth axis (F) that is inclined relative to the second axis and to the fourth axis;
the device being **characterized in that** the plate is shaped in such a manner that, when the control lever is in a neutral position, the angle between the second axis (Y) and the sixth axis (F) is strictly greater than the complement of the angle between the fourth axis (D) and the sixth axis (F).

2. A device according to claim 1, wherein the angle between the second axis and the sixth axis is greater than or equal to 75° when the control lever is in the neutral position.

3. A device according to claim 2, wherein the angle between the second axis and the sixth axis lies in the range 75° to 100° when the control lever is in the neutral position.

4. A device according to claim 3, wherein the angle between the second axis and the sixth axis lies in the range 75° to 90° when the control lever is in the neutral position.

5. A device according to any one of claims 1 to 4, wherein the plate comprises a first frame and a second frame that are inclined relative to each other, the first shaft being associated with the first frame and the second shaft being associated with the second frame.

6. A device according to any preceding claim, arranged in such a manner that the first axis (X), the second axis (Y), the fourth axis (D), and the sixth axis (F) are substantially concurrent at a first point, and the first axis, the third axis (A), and the fifth axis (C), are substantially concurrent at a second point.

7. A device according to any one of claims 1 to 6, wherein the first mechanism is arranged to connect the first shaft (12) to the plate (4) by a Cardan joint.

8. A device according to any one of claims 1 to 7, wherein the second mechanism is arranged to connect the second shaft (23) to the control lever (8) by a Cardan joint.
